## Europäisches Patentamt
## European Patent Office
## Office européen des brevets

(19)

(11) Veröffentlichungsnummer: **0 043 513**
**B1**

(12) ## EUROPÄISCHE PATENTSCHRIFT

(45) Veröffentlichungstag der Patentschrift:
12.09.84

(51) Int. Cl.³: **F 16 D 59/02, H 02 K 7/102**

(21) Anmeldenummer: **81104954.3**

(22) Anmeldetag: **26.06.81**

(54) **Bremsmotor mit einer elektromagnetisch lüftbaren Innenbacken-Trommelbremse.**

(30) Priorität: **03.07.80 DE 3025265**

(43) Veröffentlichungstag der Anmeldung:
**13.01.82 Patentblatt 82/2**

(45) Bekanntmachung des Hinweises auf die Patenterteilung:
**12.09.84 Patentblatt 84/37**

(84) Benannte Vertragsstaaten:
**AT BE CH DE FR GB LI NL**

(56) Entgegenhaltungen:
**DE - A - 1 450 156**
**DE - A - 1 463 887**
**DE - A - 1 463 888**
**FR - A - 2 260 176**
**GB - A - 830 535**
**GB - A - 1 024 112**
**US - A - 2 436 354**

(73) Patentinhaber: **Holec GmbH, Rheinstrasse 32,
D-6100 Darmstadt (DE)**

(72) Erfinder: **Fröhlich, Günter, Ing. (grad.),
Buchenstrasse 30, D-5828 Ennepetal (DE)**

(74) Vertreter: **Zeitler, Giselher, Postfach 26 02 51,
D-8000 München 26 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Bremsmotor nach dem Oberbegriff des Anspruches 1.

Ein derartiger Bremsmotor ist aus der DE-B-1 463 887 bekannt. Der bekannte Bremsmotor besitzt in üblicher Weise eine in Lagern gelagerte Welle, die einen Läufer trägt, der mit einer Ständerwicklung zusammenarbeitet. Am einen Ende ragt die Welle mit einem Wellenstummel über das eine Lager hinaus, auf welchen eine Bremsstrommel befestigt ist. Koaxial zur Welle ist ein Ringmagnet in der Bremstrommel angeordnet, wobei der Querschnitt des Ringmagneten U-profilförmig ausgebildet sein kann und zwischen den Schenkeln des U-Profils eine Magnetspule, die mit Gleichstrom beschickt wird, angeordnet ist. Anstelle des U-profilförmigen Ringmagneten können auch andere Formen Verwendung finden, beispielsweise ein doppel-U-förmiger Ringmagnet. Der Ringmagnet wirkt mit Bremselementen zusammen, von denen jedes einen Magnetanker (Betätigungsanker) aufweist, der einen Bremsbelag trägt. Der Magnetanker ist seinerseits an Blattfedern befestigt, die sich in Umfangsrichtung des Ringmagneten erstrecken und unter Bildung eines keilförmigen Luftspaltes zwischen dem Ringmagneten und dem Magnetanker am Ringmagneten befestigt sind. Beim Bremsen werden die Bremsbeläge durch die Kraft der Blattfedern gegen die Bremstrommel gedrückt. Beim Speisen der Erregerspule werden die Bremsen gelüftet.

Aufgabe der Erfindung ist es, einen Bremsmotor der eingangs genannten Art zu schaffen, bei dem sich unter Beibehaltung der robusten und einfachen Ausbildung der Innenbackenbremse die Bremslüftleistung, welche beim Lüften der Bremsbeläge der Erregerspule des Ringmagneten zuzuführen ist, verringern lässt.

Diese Aufgabe wird bei der Erfindung durch die im Kennzeichen des Anspruches 1 angegebenen Merkmale gelöst, wobei die Unteransprüche vorteilhafte Weiterbildungen enthalten.

Durch die Erfindung ist es möglich, unter Beibehaltung der wesentlichen Bestandteile der bekannten robusten und einfachen Konstruktion ohne Änderung der Wicklung der Erregerspule oder Verwendung von stärkeren die Anzugskraft scheinbar erhöhenden Eisensegmenten oder der Anwendung eines anderen Kupfer-Eisen-Verhältnisses eine Verringerung der Bremslüftleistung zu erzielen. Da der Bedarf an Bremslüftleistungen geringer ist, lässt sich natürlich auch eine Bremsmomentsteigerung bei gleichbleibendem Bremsendurchmesser und Bremsengewicht erzielen. Darüber hinaus ergibt sich eine leichtere Beherrschung der Wärmeabfuhr der Erregerspule (Bremslüftspule). In vorteilhafter Weise lässt sich die Verlustleistung senken, ohne dass das Festkörpersystem geändert werden muss, wobei das Bremsmoment bei geringerer aufzuwendender Bremslüftleistung beibehalten werden kann und die Reaktionszeiten ebenfalls kurz gehalten werden können.

Die bei der Erfindung erzielte Wirkung geht darauf zurück, dass eine Erhöhung der Anzugskraft der Erregerspule bzw. Bremslüftspule erzielt werden kann, wenn bei konstant anzunehmendem Fluss, der wegen der erforderlichen Sättigung ohnehin vorhanden ist, die Flussverteilung im keilförmigen Luftspalt so vorhanden ist, dass die Flussdichte im äusseren Spaltbereich höher ist als im innen liegenden Spaltbereich. Bisher ist man im Gegensatz dazu davon ausgegangen, dass, wie es sich zwangsläufig auch bei der bekannten Innenbackentrommelbremse erwiesen hat, im innen liegenden Spaltbereich die Magnetflussdichte grösser als im aussen liegenden Spaltbereich sein soll, um im Bereich des innen liegenden Spaltbereiches eine höhere mechanische Anzugskraft auf den Betätigungsanker auszuüben als im aussen liegenden Spaltbereich, in welchem die Anzugskraft über einen längeren Hebelarm zur Einwirkung kommt.

Anhand der beiliegenden Figuren, in denen Ausführungsbeispiele dargestellt sind, soll die Erfindung noch näher erläutert werden. Es zeigen:

Fig. 1 im Schnitt ein Bremselementenpaar, das auf einem Ringmagneten angeordnet ist;

Fig. 2 in vereinfachter und schematischer Darstellung die magnetische Flussdichteverteilung im keilförmigen Spalt zwischen dem Betätigungsanker und dem Ringmagneten;

Fig. 3 in perspektivischer Ansicht ein Ausführungsbeispiel für einen Magnetanker;

Fig. 4 einen Schnitt durch den in der Fig. 3 dargestellten Magnetanker;

Fig. 5 eine Ansicht des in den Fig. 3 und 4 dargestellten Magnetankers von unten;

Fig. 6 ein weiteres Ausführungsbeispiel für einen Magnetanker;

Fig. 7 eine Draufsicht auf den in der Fig. 6 dargestellten Magnetanker und

Fig. 8 in perspektivischer Ansicht einen Teil eines Ringmagneten.

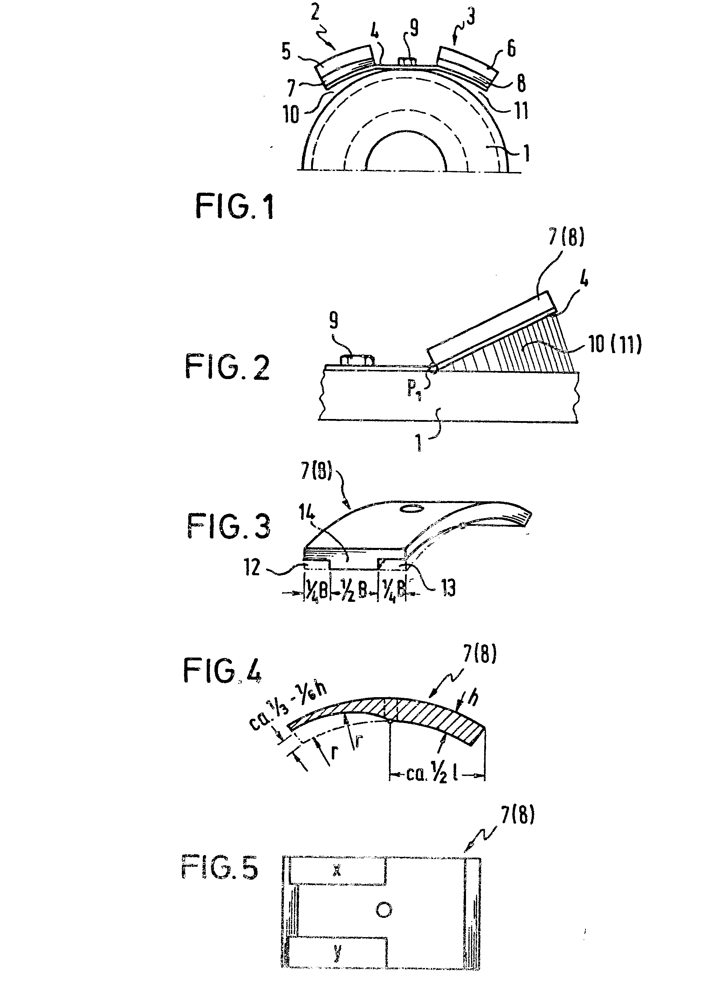

Beim in der Fig. 1 dargestellten Ausführungsbeispiel befinden sich auf einem Ringmagneten 1 Bremselemente 2 und 3, die auf einer gemeinsamen Blattfeder 4 befestigt sind. Die Bremselemente 2 und 3 bestehen aus den Bremsbelägen 5 und 6 sowie den Magnet- bzw. Betätigungsankern 7 und 8. Die Magnetanker 7 und 8 sind an den freien Enden der Blattfeder 4 befestigt. Die Blattfeder ihrerseits ist mittels einer Schraube 9 oder eines anderen geeigneten Befestigungsmittels am Ringmagneten 1 befestigt.

Zwischen den Magnetankern 7 und 8 und dem Ringmagneten 1 entstehen beim Anliegen der Bremsbeläge 5, 6 an der nicht dargestellten Bremstrommel keilförmige Luftspalte 10 und 11. Beim Speisen der beispielsweise in einer umlaufenden Nut des U-profilförmigen Ringmagneten 1 liegenden Erregerspule ergibt sich im keilförmigen Luftspalt aufgrund der Ausbildung des Magnetankers 7 bzw. 8 eine Flussdichteverteilung, wie sie schematisch in der Fig. 2 dargestellt ist. In dieser Figur sind der Einfachheit halber der Ringmagnet 1, der Magnetanker 7 bzw. 8 und die Blattfeder 4 geradlinig ausgebildet, wobei mit $P_1$ ein fiktiver Drehpunkt des Magnetankers beim Betätigen der Bremse angenommen ist. Wie die Fig. 2 zeigt, ist die Flussdichte des im Luftspalt wirkenden magnetischen Flusses im äusseren Spaltbereich des keilförmigen Spaltes 10 bzw. 11 aufgrund der Ausbildung des Magnetankers bzw. Betätigungsankers 7 bzw. 8 höher als im innen liegenden Spaltbereich. Aufgrund dessen lässt sich bei einem bei Sättigung als konstant anzunehmenden Fluss ein höheres auf den Betätigungsanker 7 bzw. 8 einwirkendes Drehmoment erzielen als bei der bekannten Ausführungsform, bei der die Flussdichteverhältnisse umgekehrt sind, nämlich die höhere Flussdichte im innen liegenden Spaltbereich herrscht, während im aussen liegenden Spaltbereich eine geringere Flussdichte vorhanden ist.

Die in der Fig. 2 dargestellten Flussdichteverhältnisse lassen sich durch entsprechende Wahl des Materials für die Magnetanker 7 und 8 und dessen spezielle Anordnung entlang des keilförmigen Bereiches erzielen. Jedoch ist es auch möglich, wie in den Fig. 3 bis 7 dargestellt ist, durch entsprechende geometrische Ausgestaltung des Magnetankers bzw. Betätigungsankers 7, 8 die gewünschte Flussdichteverteilung im keilförmigen Luftspalt 10 bzw. 11 zu erzielen, ohne dass hierzu konstruktive Änderungen an der in der Fig. 1 dargestellten Trommelbremse notwendig sind.

Bei dem in den Fig. 3 bis 5 dargestellten Ausführungsbeispiel lässt sich durch Wegnahme an magnetisch wirksamen Material am Magnetanker 7 bzw. 8 in den Bereichen 12 und 13, welche sich entlang des innen liegenden keilförmigen Luftspaltbereiches erstrecken, die gewünschte Flussdichteverteilung erzielen. Auf diese Weise gewinnt man im äusseren Bereich des keilförmigen Luftspaltes 10 bzw. 11 eine magnetisch wirksame Ankerkörpermasse, die grösser bemessen ist, als im inneren Spaltbereich des keilförmigen Luftspaltes 10 bzw. 11. Die dabei entstandenen Ausnehmungen 12 und 13 können durch magnetisch nicht wirksames Material ausgefüllt werden. Beim dargestellten Ausführungsbeispiel ist zwischen den beiden Ausnehmungen, die sich in Umfangsrichtung des Ringmagneten 1 erstrecken, ein mittlerer Steg 14 belassen. Die Breite dieses mittleren Steges entspricht etwa der Gesamtbreite der beiden Ausnehmungen 12 und 13. Die Ausnehmungen erstrecken sich dabei etwa über die Hälfte der Ausdehnung des Magnetankers 7, 8 in Umfangsrichtung des Ringmagneten 1. Am einen Ende des Magnetankers 7, 8 beträgt die Höhe jeder Ausnehmung etwa 1/3 bis 1/6 der Höhe des Magnetankermaterials. Die Ausnehmung kann einen Radius r aufweisen, der dem Radius r des Ringmagneten bzw. dem Innenkrümmungsradius des Magnetankers 7, 8 entspricht. Die Ausnehmungen 12 und 13 können z.B. herausgedreht, herausgefräst oder warm eingepresst sein. Für die Magnetanker 7, 8 eignen sich Eisensegmente.

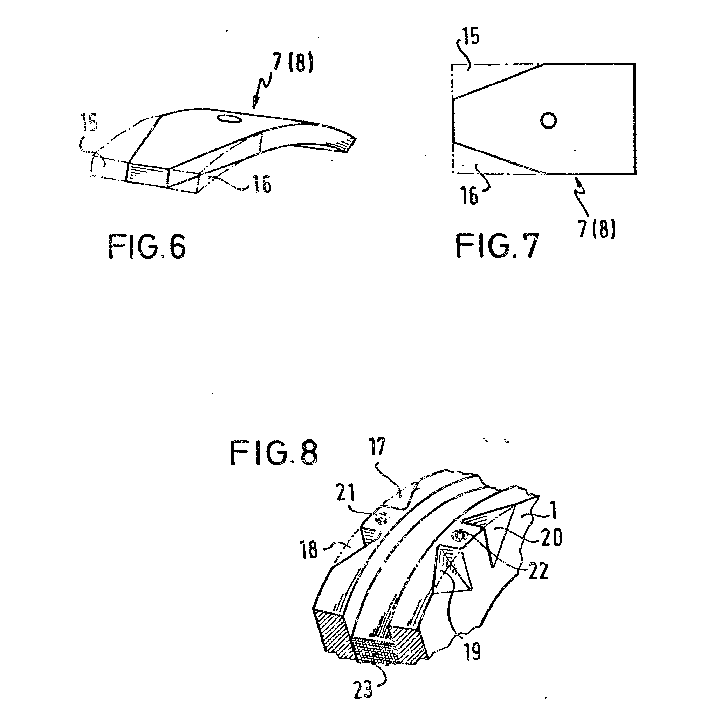

Beim Ausführungsbeispiel der Fig. 6 und 7 ist das Eisensegment des Magnetankers 7, 8 im innen liegenden Luftspaltbereich etwa trapezförmig ausgebildet. Dies erfolgt durch seitliche Entnahme von Magnetankermaterial 15, 16. Es eignet sich auch eine Dreiecksform oder eine andere sich verjüngende Form. Die Entnahme des Magnetankermaterials kann hier beispielsweise durch Absägen vorgenommen werden, wobei sich hier eine einfache Umrüstung von fertigen Magnetankern ergibt.

Beim in der Fig. 8 dargestellten Ausführungsbeispiel ist der Ringmagnet 1 mit entsprechenden Ausnehmungen 17, 18, 19, 20 versehen, die im innen liegenden Bereich des keilförmigen Luftspaltes 10, 11 liegen. Wie aus der Figur zu ersehen ist, befinden sich die Ausnehmungen 17, 18, 19, 20 in der Nähe der Befestigungsstellen 21, 22, an denen die Blattfeder 4 für die Bremselemente befestigt ist. Die in Form von Kerben ausgebildeten Ausnehmungen 17 bis 20 können beispielsweise beim Giessen des Ringmagneten 1 hergestellt werden. Diese Einkerbungen können auch in konkaver Form, ähnlich wie beim Ausführungsbeispiel der Fig. 3 bis 5 ausgebildet sein. Die Ausnehmungen 17 bis 20 am Ringmagneten 1 können allein oder zusammen mit den entsprechend ausgebildeten Ringmagneten, beispielsweise den Ringmagneten der Fig. 3 bis 7 zur Anwendung kommen. In der Fig. 8 ist auch das U-förmige Profil des Ringmagneten zu erkennen, wobei in der umlaufenden Nut eine Wicklung 23 der Erregerspule bzw. Bremslüftspule angeordnet ist.

Bei der Erfindung lässt sich eine Verringerung der Verlustleistung der Bremsluftspule um etwa 40% unter Beibehaltung der Bremseigenschaften erzielen. Es lässt sich damit eine erhöhte Schaltzahlausnutzung des ansitzenden Motors erzielen. Wenn man die Spulenleistung beibehalten will, ergibt sich eine Erhöhung des erzeugten Bremsmomentes. Bei gleichgehaltenem Bremsmoment lässt sich die Bremse verkleinern. Die Abbremswärme entsteht im wesentlichen in der nicht dargestellten Bremstrommel, so dass von der Bremsluftspule diese Wärme nicht übernommen werden muss.

**Patentansprüche:**

1. Bremsmotor mit einer elektromagnetisch lüftbaren Innenbacken-Trommelbremse, bei der ein Ringmagnet (1) mit ringförmiger Erregerspule mit Bremselementen (2, 3) zusammenwirkt, von denen jedes einen Bremsbelag (5, 6) tragenden Magnetanker (7, 8) aufweist und auf in Umfangsrichtung des Ringmagneten (1) sich erstreckenden Blattfedern (4) unter Bildung eines keilförmigen Luftspaltes (10, 11) zwischen dem Ringmagneten (1) und dem Magnetanker (7, 8) befestigt ist, und bei der beim Bremsen durch die Kraft der Blattfedern (4) die Bremsbeläge (5, 6) gegen die Bremstrommel gedrückt werden, dadurch gekennzeichnet, dass der Weg des Magnetflusses derart gestaltet ist, dass die Flussdichte des im Luftspalt (10, 11) zwischen dem Magnetanker (7, 8) und dem Ringmagneten (1) wirkenden magnetischen Flusses im äusseren Spaltbereich des keilförmigen Luftspaltes (10, 11) mit der grösseren Spaltbreite grösser ist als im innen liegenden Spaltbereich mit der geringeren Spaltbreite.

2. Bremsmotor nach Anspruch 1, dadurch gekennzeichnet, dass der Magnetanker (7, 8) und/oder der Ringmagnet (1) im äusseren Spaltbereich des keilförmigen Luftspaltes (10, 11) eine höhere Permeabilität aufweist als im innen liegenden Spaltbereich.

3. Bremsmotor nach Anspruch 1 oder 2, dadurch gekennzeichnet, dass die Masse bzw. Abmessungen des magnetisch wirksamen Magnetankers (7, 8) bzw. Ringmagneten (1) im äusseren Spaltbereich grösser sind als im inneren Spaltbereich des keilförmigen Luftspaltes (10, 11).

4. Bremsmotor nach einem der Ansprüche 1 bis 3, dadurch gekennzeichnet, dass der magnetisch wirksame Magnetanker (7, 8) eine Trapez- oder Dreiecksform aufweist (Fig. 6, 7).

5. Bremsmotor nach einem der Ansprüche 1 bis 4, dadurch gekennzeichnet, dass die Dicke des Magnetankers (7, 8) über seine gesamte Breite oder einen Teil seiner Breite im innen liegenden Spaltbereich des keilförmigen Luftspaltes (10, 11) geringer bemessen ist als im aussen liegenden Spaltbereich (Fig. 3 bis 5).

6. Bremsmotor nach einem der Ansprüche 1 bis 5, dadurch gekennzeichnet, dass der Ringmagnet (1) im inneren Spaltbereich des keilförmigen Luftspaltes (10, 11) Einkerbungen bzw. Ausnehmungen (17 bis 20) besitzt.

**Revendications**

1. Moto-frein comportant un frein à tambour à mâchoire intérieure desserrable électromagnétiquement, dans lequel un aimant annulaire (1) muni d'une bobine d'excitation de forme annulaire coopère avec des éléments de frein (2, 3) dont chacun comporte une armature aimantée (7, 8) portant une garniture de frein (5, 6) et est fixé sur des ressorts à lames (4) s'étendant dans la direction circonférentielle de l'aimant annulaire (1) en formant un entrefer (10, 11) en forme de coin entre l'aimant annulaire (1) et l'armature aimantée (7, 8), et dans lequel, lors du freinage, les garnitures de frein (5, 6) sont pressées contre le tambour de frein par la force des ressorts à lames (4), caractérisé en ce que le trajet du flux magnétique est conformé de telle sorte que la densité de flux du flux magnétique agisssant dans l'entrefer (10, 11) entre l'armature aimantée (7, 8) et l'aimant annulaire (1) est plus grande dans la région extérieure de largeur d'entrefer plus grande de l'entrefer en forme de coin (10, 11) que dans la région d'entrefer de largeur d'entrefer plus faible située à l'intérieur.

2. Moto-frein selon la revendication 1, caractérisé en ce que l'armature aimantée (7, 8) et/ou l'aimant annulaire (1) présentent dans la région extérieure de l'entrefer en forme de coin (10, 11) une perméabilité plus élevée que dans la région d'entrefer située à l'intérieur.

3. Moto-frein selon la revendication 1 ou 2, caractérisé en ce que la masse ou les dimensions de l'armature aimantée (7, 8) ou de l'aimant annulaire (1) magnétiquement actif sont plus grandes dans la région d'entrefer extérieure que dans la région d'entrefer intérieure de l'entrefer en forme de coin (10, 11).

4. Moto-frein selon l'une des revendications 1 à 3, caractérisé en ce que l'armature aimantée (7, 8) magnétiquement active présente une forme trapézoïdale ou triangulaire (figures 6, 7).

5. Moto-frein selon l'une des revendications 1 à 4, caractérisé en ce que l'épaisseur de l'armature aimantée (7, 8), sur la totalité de sa largeur ou une partie de sa largeur, à une dimension plus faible dans la région située à l'intérieur de l'entrefer en forme de coin (10, 11) que dans la région d'entrefer située à l'extérieur (figures 3 à 5).

6. Moto-frein selon l'une des revendications 1 à 5, caractérisé en ce que l'aimant annulaire (1) présente des encoches ou évidements (17 à 20) dans la région intérieure de l'entrefer en forme de coin (10, 11).

**Claims**

1. A brake motor with an electromagnetically releasable drum brake with inner shoes, in which a ring magnet (1) with an annular excitation coil cooperates with brake elements (2, 3), each of which has a magnet armature (7, 8) carrying a brake lining and is secured on leaf springs (4) extending in the peripheral direction of the ring magnet (1) whilst forming a wedge-shaped air gap (10, 11) between the ring magnet (1) and the magnet armature (7, 8), and in which, when braking, the brake linings (5, 6) are pressed against the brake drum by the force of the leaf springs (4), characterized in that the path of the magnetic flux is formed in such a way that the flow density of the magnetic flux acting in the air gap (10, 11) between the magnet armature (7, 8) and the ring magnet (1) is greater in the outer gap region of the wedge-shaped air gap (10, 11) with the larger gap width than in the inner gap region with the smaller gap width.

2. A brake motor according to claim 1 characterized in that the magnet armature (7, 8) and/or the ring magnet (1) has a greater permeability in the outer gap region of the wedge-shaped air gap (10, 11) than in the inner gap region.

3. A brake motor according to claim 1 or 2, characterized in that the measurements or dimensions of the magnetically effective magnet armature (7, 8) or ring magnet (1) are larger in the outer gap region than in the inner gap region of the wedge-shaped air gap (10, 11).

4. A brake motor according to one of claims 1 to 3, characterized in that the magnetically effective magnet armature (7, 8) is trapezoidal or triangular (Figs. 6, 7).

5. A brake motor according to one of claims 1 to 4, characterized in that the thickness of the magnet armature (7, 8) over its entire width or part of its width is of smaller dimensions in the inner gap region of the wedge-shaped air gap (10, 11) than in the outer gap region (Figs. 3 to 5).

6. A brake motor according to one of claims 1 to 5, characterized in that the ring magnet (1) has notches or recesses (17 to 20) in the inner gap region of the wedge-shaped air gap (10, 11).

1/2

FIG.1

FIG.2

FIG.3

FIG.4

FIG.5

2/2

FIG.6

FIG.7

FIG.8